# EUROPEAN PATENT SPECIFICATION

(11) **EP 2 620 331 B1**
(45) Date of publication and mention of the grant of the patent: **18.11.2015**
(21) Application number: 11826896.0
(22) Date of filing: 22.09.2011
(51) Int. Cl.: B60R 21/017, B60R 21/16, B60R 21/263, B60R 21/01

(54) **DRIVING CONTROL METHOD FOR OCCUPANT PROTECTION CONTROL DEVICE AND OCCUPANT PROTECTION CONTROL DEVICE**
ANTRIEBSSTEUERUNGSVERFAHREN FÜR EINE INSASSENSCHUTZ-STEUERVORRICHTUNG UND INSASSENSCHUTZ-STEUERVORRICHTUNG
PROCÉDÉ DE COMMANDE D'ENTRAÎNEMENT POUR DISPOSITIF DE COMMANDE DE PROTECTION DES OCCUPANTS ET DISPOSITIF ASSOCIÉ

(30) Priority: 24.09.2010 JP 2010212974
(43) Date of publication of application: 31.07.2013
(73) Proprietor: Bosch Corporation, Tokyo 150-8360 (JP)
(72) Inventor: YAJIMA Satoshi, Yokohama-shi Kanagawa 224-8501 (JP)
(74) Representative: DREISS Patentanwälte PartG mbB
(86) International application number: PCT/JP2011/071587
(87) International publication number: WO 2012/039451

(56) References cited:
- JP-A- H0 732 968
- JP-A- H05 238 349
- JP-A- 2001 239 916
- JP-A- 2003 040 076
- US-A- 5 326 146
- US-B1- 6 363 307

## Description

### Technical Field

The present invention relates to a drive control method of an occupant protection control apparatus for drive-controlling an occupant protection apparatus, such as what is called an airbag apparatus, and also relates to the control apparatus itself. More particularly, the invention relates to the drive control method and the control apparatus intended for the improvement of the operation reliability of the occupant protection apparatus and for the like purpose.

### Background Art

For an occupant protection apparatus, such as what is called an airbag apparatus, in terms of further improvement of the assurance and reliability of occupant protection and the like purpose, for example, Patent Document 1 has proposed a configuration in which squibs, an ignition means for causing an airbag to explode, are configured in two stages so that the airbag will be caused to explode by igniting one of the two squibs or simultaneously igniting both of them depending on the seat position or the like.

On the other hand, Patent Document 2 has proposed a configuration in which a first sensor for outputting an electrical detection signal in response to the impact of a crash and a second sensor, having a mechanical structure, for opening/closing depending on the presence or absence of the impact are provided so that, even in a state equivalent to that in which the first sensor has detected a crash, due to malfunction of the circuit or the like in spite of no actual crash, if the second sensor has not detected any impact, the first and second squibs will not be ignited, thereby preventing an airbag from being incorrectly caused to explode.

However, both the apparatuses mentioned above are based on the fact that the two-stage squibs are working correctly. Since the occupant protection apparatus directly relates to an occupant's life, it is configured and provided so as to avoid as much as possible malfunction, failure or the like. But, furthermore, it is desirable to be able to respond as much as possible to any possible malfunction, failure or the like.

From this viewpoint, an occupant protection apparatus is desired that can reduce the impact on an occupant as much as possible even when, as one possible failure, for example, in two-stage squibs, the first-stage squib fails to be ignited for some reason and only the second-stage squib can be ignited.
Patent Document 1: JP-A-2003-252169
Patent Document 2: JP-A-2003-40076

Further prior art is known from US 5 326 146 A which relates to an apparatus for controlling a plurality of vehicle safety devices.

### Disclosure of the Invention

### Problems to be Solved by the Invention

In view of the above problem, the present invention provides an occupant protection apparatus that can reduce the impact on an occupant as much as possible to securely protect the occupant even when, in an occupant protection using two-stage ignition means, the first-stage ignition means is in failed state.

### Means for Solving the Problems

The problems are solved by a drive control method according to claim 1 and by an occupant protection control apparatus according to claim 2.

According to a first aspect of the invention, a drive control method of an occupant protection control apparatus for controlling the operation of a two-stage ignition-type occupant protection apparatus having two ignition means is provided, wherein, when a first ignition means of the occupant protection apparatus is in failed state at the time when the first ignition means is normally scheduled to be ignited, a second ignition means in place of the first ignition means is ignited at the time when the first ignition means is normally scheduled to be ignited, and the first ignition means is ignited at the time when the second ignition means is normally scheduled to be ignited.

According to a second aspect of the invention, an occupant protection control apparatus for drive-controlling a two-stage ignition-type occupant protection apparatus having two ignition means is provided, comprising: a control unit capable of ignition control of the two ignition means based on the determination result of whether or not a vehicle crash has occurred; and an interface circuit capable of igniting the two ignition means according to a necessity of igniting the two ignition means performed by the control unit,
wherein, when a failure diagnosis of the first ignition means is performed and it is diagnosed that the first ignition means is in failed state, the control unit, in order to ignite the ignition means, ignite the second ignition means in place of the first ignition means at the time when the first ignition means is normally scheduled to be ignited, and ignite the first ignition means at the time when the second ignition means is normally scheduled to be ignited.

### Advantage of the Invention

The invention provides an effect in which, since, when the first ignition means is in failed state, the second ignition means is ignited at the time when the first ignition means is normally scheduled to be ignited, unlike a conventional method in which, when the first ignition means is in failed state, the second ignition means is ignited at the time when the second ignition means is normally scheduled to be ignited, the occupant protection apparatus is activated on a more timely basis in terms of occupant protection, enabling further improvement of the assurance and reliability of occupant protection.

### Brief Description of Drawings

FIG. 1 is a configuration diagram showing a configuration example of an occupant protection control apparatus in accordance with an embodiment of the invention.
FIG. 2 is a flowchart showing the steps of drive-control processing performed by a control unit of the occupant protection control apparatus shown in Fig. 1.
FIG. 3(A) and FIG. 3(B) are timing charts showing when two squibs are ignited in normal time, wherein Fig. 3(A) is a timing chart showing when a first-stage squib is ignited, and Fig. 3(B) is a timing chart showing when a second-stage squib is ignited.
FIG. 4(A) and FIG. 4(B) are timing charts showing when two squibs are ignited by drive control processing in accordance with the embodiment of the invention when the first-stage squib is in failed state, wherein Fig. 4(A) is a timing chart showing when the first-stage squib is ignited, and Fig. 4(B) is a timing chart showing when the second-stage squib is ignited.
FIG. 5(A) and FIG. 5(B) are timing charts showing another example of when two squibs are ignited when the first-stage squib is in failed state, wherein Fig. 5(A) is a timing chart showing when the first-stage squib is ignited, and Fig. 5(B) is a timing chart showing when the second-stage squib is ignited.

### Explanation of Codes

- 1: control unit
- 2: interface circuit
- 3: driver airbag apparatus
- 3a: first squib for driver seat
- 3b: second squib for driver seat
- 4: passenger airbag apparatus
- 4a: first squib for passenger seat
- 4b: second squib for passenger seat

### Description of Specific Embodiment

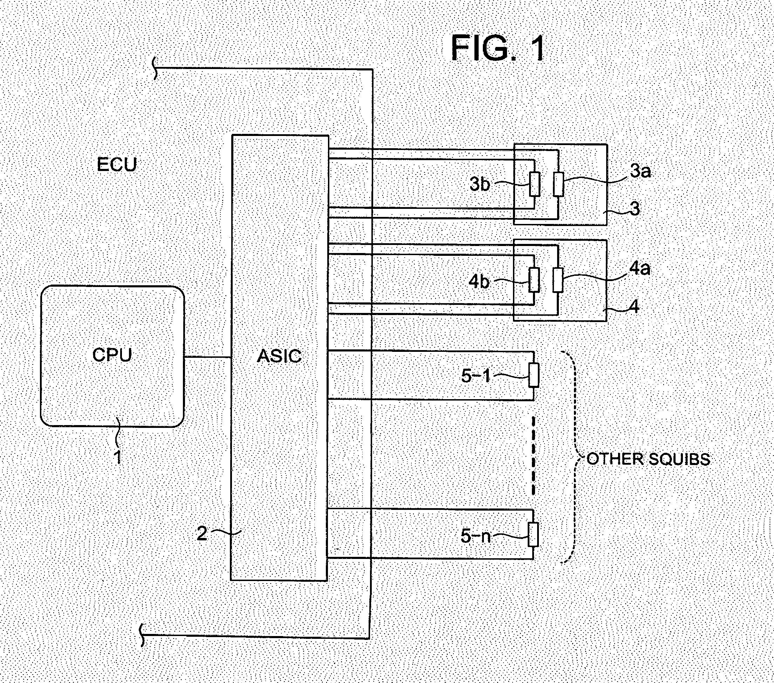

An embodiment of the invention is described below with reference to Figs. 1 to 5.

First, with reference to Fig. 1, the configuration of an occupant protection control apparatus (indicated as "ECU" in Fig. 1) in accordance with the embodiment of the invention is described.

The occupant protection control apparatus in accordance with the embodiment of the invention (hereinafter referred to as "the apparatus") includes a control unit (indicated as "CPU" in Fig. 1) 1 and an interface circuit (indicated as "ASIC" in Fig. 1) 2, and is configured to enable drive-controlling of a driver airbag apparatus 3 and a passenger airbag apparatus 4 as an occupant protection apparatus of an auto four-wheel vehicle, and also, without going into detail, enable drive-controlling (ignition-controlling) of a plurality of squibs 5-1 to 5-n provided in another occupant protection apparatus, such as a side airbag apparatus (not shown).

The control unit 1 includes, for example, a microcomputer (not shown) having a well known configuration and associated storage devices (not shown), such as a RAM and ROM, and performs crash diagnosis processing in an almost conventional way, drive-control processing of the apparatus described later and the like.

The interface circuit 2 includes a failure diagnosis circuit and constant current circuit for squibs including a first and second squibs 3a, 3b for driver seat of the driver airbag apparatus 3 described later, and also includes an energization circuit for squib ignition and the like. In the embodiment of the invention, the interface circuit 2 is implemented using an application specific integrated circuit (ASIC).

Note that the apparatus also includes a backup power supply circuit, a warning lamp drive circuit and the like that are not shown in Fig. 1, but this configuration itself of the apparatus is essentially the same as that of a conventional apparatus.

The driver airbag apparatus 3 and the passenger airbag apparatus 4 each have a configuration of two-stage squibs as an ignition means.

Specifically, the driver airbag apparatus 3 includes the first and second squibs 3a, 3b for driver seat, and the passenger airbag apparatus 4 includes a first and second squibs 4a, 4b for passenger seat.

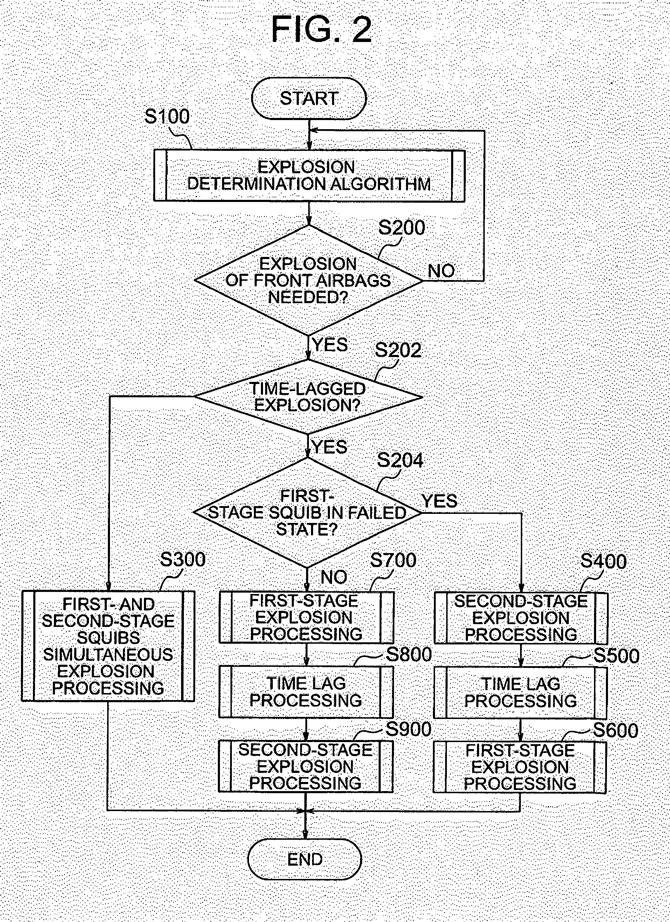

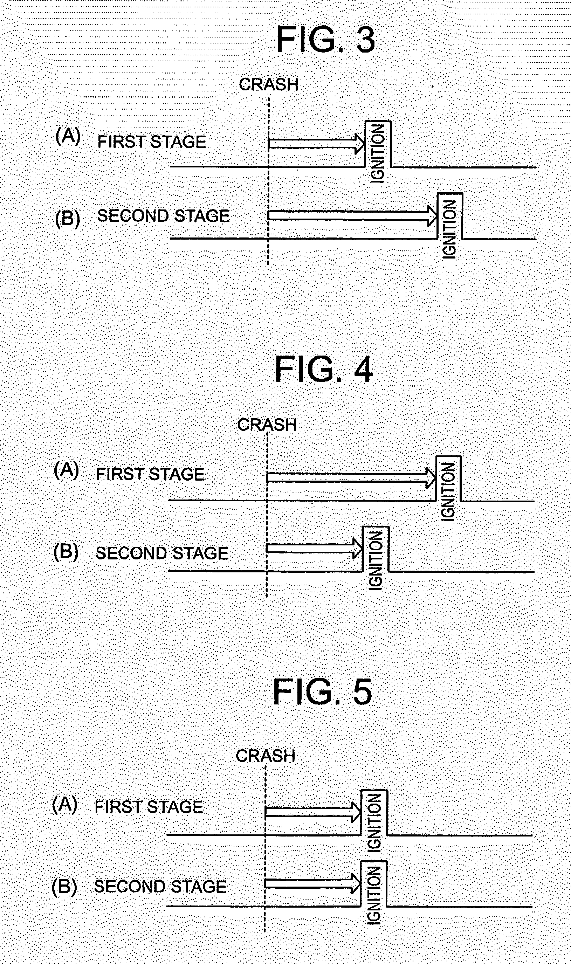

Fig. 2 is a flowchart showing the steps of drive-control processing performed by the control unit 1. Then, the steps are described with reference to Fig. 2. Note that, in the description below, timing charts showing when the two-stage squibs in Figs. 3 to 5 are ignited are used as appropriate. In Figs. 3 to 5, the horizontal axis indicates elapsed time, and the vertical axis indicates the presence or absence of ignition.

When the control unit 1 starts the processing, first, an explosion determination algorithm is executed (see step S100 in Fig. 2). Specifically, determination is performed on whether or not the driver airbag apparatus 3, the passenger airbag apparatus 4 and another occupant protection apparatus not shown need to be caused to explode or activated. This processing is essentially an almost conventional processing, so is not described in detail here.

Then, through the execution of the above-described explosion determination algorithm, it is determined whether or not the execution of the above-described explosion determination algorithm has determined an explosion of front airbags to be needed, that is, specifically, it is determined whether or not an explosion of the driver airbag apparatus 3 and the passenger airbag apparatus 4 has been determined to be needed (see step S200 in Fig. 2). If determined that the explosion has been determined to be needed (i.e., YES), the process proceeds to step S202 to be described next. On the other hand, if determined that the explosion has not been determined to be needed (i.e., NO), the execution of the explosion determination algorithm is repeated.

Note that, in the following description, in order to simplify the description to facilitate understanding, the individual steps are described assuming that it has been determined that the explosion of the driver airbag apparatus 3 is needed (i.e., YES) in the above-described step S200. But, it is essentially natural that the passenger airbag apparatus 4 and another occupant protection apparatus not shown may be similarly processed.

In step S202, it is determined whether or not the determination that the explosion of the driver airbag apparatus 3 is needed is a determination that what is called a time-lagged explosion is needed.

Here, the time-lagged explosion is an airbag explosion method in which the second-stage squib is ignited a predetermined time after the first-stage squib is ignited as shown in Fig. 3, as is a conventional explosion method.

Then, in step S202, if determined that the time-lagged explosion is not needed (i.e., NO), the first- and second-stage squibs will be ignited simultaneously (see step S300 in Fig. 2). That is, the first squib 3a for driver seat and the second squib 3b for driver seat will be simultaneously ignited to cause the driver airbag apparatus 3 to explode.

On the other hand, in step S202, if determined that the time-lagged explosion is needed (i.e., YES), it is determined whether or not the first-stage squib has been diagnosed to be in failed state. Specifically, it is determined whether or not a separate squib failure diagnosis processing has provided a diagnosis result of the first squib 3a for driver seat in failed state (see step S204 in Fig. 2).

Here, the squib failure diagnosis itself is performed in a conventional way, not described in detail here, in which, for example, whether a squib is broken or not is determined by determining whether or not the voltage across the squib is a predetermined voltage. Such a squib failure diagnosis processing is periodically and repeatedly performed by the control unit 1 separately from a series of processing shown in Fig. 2. Usually, for the diagnosis result of whether the squib is in failed state or not, for example, a predetermined diagnosis flag is set to "1" or "0" according to the diagnosis result, then the flag is stored in a predetermined storage area of the control unit 1 which will be updated according to the result of a next failure diagnosis processing. Thus, the processing in step S204 is not to newly diagnose whether the first-stage squib is in failed state or not, but is to read the result of the most recent squib failure diagnosis processing, or specifically a diagnosis flag as described above, and judge the value of the flag to determine whether or not the first-stage squib has been diagnosed to be in failed state.

Then, in step S204, if determined that the first squib 3a for driver seat has been diagnosed to be in failed state (i.e., YES), the process proceeds to step S400 to be described later. On the other hand, if determined that the first squib 3a for driver seat has not been diagnosed to be in failed state (i.e., NO), a first-stage explosion processing will be performed, that is, the first squib 3a for driver seat will be ignited to bring the driver airbag apparatus 3 into a first-stage exploded state (step S700 in Fig. 2).

Next, through a time lag processing to wait for a predetermined time to be elapsed (see step S800 in Fig. 2), then a second-stage explosion processing will be performed (see step S900 in Fig. 2).

Specifically, in step S900, the second squib 3b for driver seat will be ignited to bring the driver airbag apparatus 3 into a fully exploded state.

Note that the series of processing from step S700 to step S900 described above is an almost conventional processing, in which when the first and second squibs 3a, 3b for driver seat are ignited is such that, as shown in Fig. 3, first, the first squib 3a for driver seat is ignited (see Fig. 3(A)), then, after a predetermined time elapses, the second squib 3b for driver seat is ignited (see Fig. 3(B)).

On the other hand, in step S400, according to the determination result of step S204 that the first squib 3a for driver seat has been diagnosed to be in failed state, a second-stage explosion processing will be performed in which the second squib 3b for driver seat in place of the first squib 3a for driver seat will be ignited at the time when the first squib 3a for driver seats normally scheduled to be ignited (see Fig. 4(B)).

Next, a time lag processing will be performed (see step S500 in Fig. 2). Note that this time lag processing is essentially identical to the time lag processing in step S800 described earlier, and is not repeatedly described here.

After this time lag processing, a first-stage explosion processing will be performed in which the first squib 3a for driver seat will be ignited (see Fig. 4(A)). Here, in this step S600, the first squib 3a for driver seat is ignited again in spite of the determination result that the first squib 3a for driver seat has been diagnosed to be in failed state in earlier step S204. This is because of the expectation that the second ignition may possibly succeed.

Igniting the second squib 3b for driver seat in place of the first squib 3a for driver seat at the time when the first squib 3a for driver seat is normally scheduled to be ignited as described above is based on the viewpoint described below.

In an airbag apparatus including a conventional two-stage squibs, as previously described, it is normal that, even when the first-stage squib is in failed state at its ignition time, the second-stage squib is consistently ignited at its predetermined ignition time when a predetermined time has elapsed since the ignition time of the first-stage squib. However, from the viewpoint of further improving the reliability of occupant protection, the explosion of the airbag at the first-stage squib ignition time even to a little extent that the normal level of airbag explosion corresponding to the first-stage squib ignition is not ensured may in any way reduce the impact of the steering wheel on the driver by the airbag caused to explode when the body of the driver is about to hit the steering wheel, which may further improve the reliability of occupant protection.

Note that, in the example described above, when the first squib 3a for driver seat is in failed state, the second squib 3b for driver seat in place of the first squib 3a for driver seat is ignited at the time when the first squib 3a for driver seat is normally scheduled to be ignited, then the first squib 3a for driver seat is reattempted to be ignited at the time when the second squib 3b for driver seat is normally scheduled to be ignited.

As a non-claimed example the first squib 3a for driver seat and the second squib 3b for driver seat, when it is determined that the first squib 3a for driver seat has been diagnosed to be in failed state (see step S204 in Fig. 2), it may also be preferable that, at the time when the first squib 3a for driver seat is normally scheduled to be ignited, the second squib 3b for driver seat is ignited (see Fig. 5(B)), and at the same time, the first squib 3a for driver seat is attempted to be ignited on receiving an ignition signal (see Fig. 5(A)).

The embodiment of the invention has been described taking the airbag apparatus as an example, but the invention does not need to be limited to this. For example, the invention can be applied to the drive control of another occupant protection apparatus, such as a belt tensioner including a two-stage ignition means. That is, for example, for a belt tensioner including a two-stage ignition means, as with the embodiment of the invention, it is preferable that, when a first-stage ignition means has been diagnosed to be in failed state, a second-stage ignition means in place of the first-stage ignition means is driven (ignited) at the time when the first-stage ignition means is normally scheduled to be driven (ignited), then the first-stage ignition means is driven (ignited) at the time when the second-stage ignition means is normally scheduled to be driven (ignited).

### Industrial Applicability

The invention is suitable for an occupant protection apparatus that requires further improvement of the assurance and reliability of occupant protection.

## Claims

1. A drive control method of an occupant protection control apparatus for controlling the operation of a two-stage ignition-type occupant protection apparatus having two ignition means (3a,3b),
wherein the method comprises a time-lagged explosion method in which a second ignition means (3b) of the occupant protection apparatus is normally scheduled to be ignited a predetermined time after a first ignition means (3a) of the occupant protection apparatus is ignited, and
wherein, when the first ignition means (3a) is determined (S204) to be in failed state at the time when the first ignition means (3a) is normally scheduled to be ignited, the second ignition means (3b) in place of the first ignition means (3a) is ignited (S400) at the time when the first ignition means (3a) is normally scheduled to be ignited, and the first ignition means (3a) is ignited (S600) at the time when the second ignition means (3b) is normally scheduled to be ignited, in spite of the determination result indicating the failed state of the first ignition means (3a).

2. An occupant protection control apparatus for drive-controlling a two-stage ignition-type occupant protection apparatus having two ignition means (3a, 3b), comprising: a control unit (1) capable of ignition control of the two ignition means (3a ,3b) based on the determination result of whether or not a vehicle crash has occurred; and an interface circuit (2) capable of igniting the two ignition means (3a, 3b) according to a necessity of igniting the two ignition means (3a, 3b) performed by the control unit (1),
wherein a time-lagged explosion is provided in which the second ignition means (3b) of the occupant protection apparatus is normally scheduled to be ignited a predetermined time after the first ignition mean (3a) of the occupant protection apparatus is ignited, and
wherein, if a failure diagnosis of the first ignition means (3a) is performed and it is determined that the first ignition means (3a) is in failed state, the control unit (1), in order to ignite the ignition means, ignite the second ignition means (3b) in place of the first ignition means (3a) at the time when the first ignition means (3a) is normally scheduled to be ignited, and ignite the first ignition means (3a) at the time when the second ignition means (3b) is normally scheduled to be ignited, in spite of the determination result indicating the failed state of the first ignition means (3a).

## Patentansprüche

1. Antriebssteuerverfahren für eine Insassenschutz-Steuervorrichtung zum Steuern des Betriebs einer zweistufigen Insassen-Schutzvorrichtung des Zündungstyps, die zwei Zündmittel (3a, 3b) besitzt,
wobei das Verfahren ein zeitversetztes Explosionsverfahren umfasst, in dem ein zweites Zündmittel (3b) der Insassen-Schutzvorrichtung normalerweise so zeitgesteuert gezündet wird, dass es um eine vorgegebene Zeit nach dem Zünden des ersten Zündmittels (3a) der Insassen-Schutzvorrichtung gezündet wird, und
wobei dann, wenn zu dem Zeitpunkt, zu dem das erste Zündmittel (3a) normalerweise zeitgesteuert gezündet werden soll, bestimmt wird (S204), dass das erste Zündmittel in einem Fehlerzustand ist, statt des ersten Zündmittels (3a) das zweite Zündmittel (3b) zu dem Zeitpunkt, zu dem das erste Zündmittel normalerweise zeitgesteuert gezündet werden soll, gezündet wird, und das erste Zündmittel (3a) zu dem Zeitpunkt, zu dem das zweite Zündmittel (3b) normalerweise zeitgesteuert gezündet werden soll, gezündet wird, obwohl das Bestimmungsergebnis den Fehlerzustand des erste Zündmittels (3a) angibt.

2. Insassenschutz-Steuervorrichtung, um eine zweistufige Insassen-Schutzvorrichtung des Zündungstyps, die zwei Zündmittel (3a, 3b) besitzt, zu steuern, die Folgendes umfasst: eine Steuereinheit (1), die eine Zündsteuerung der beiden Zündmittel (3a, 3b) anhand des Bestimmungsergebnisses, ob ein Fahrzeugaufprall stattgefunden hat oder nicht, ausführen kann; und eine Schnittstellenschaltung (2), die die beiden Zündmittel (3a, 3b) entsprechend einer Notwendigkeit des Zündens der beiden Zündmittel (3a, 3b), das durch die Steuereinheit (1) ausgeführt wird, zünden kann,
wobei eine zeitversetzte Explosion bereitgestellt wird, bei der das zweite Zündmittel (3b) der Insassen-Schutzvorrichtung normalerweise um eine vorgegebene Zeit nach dem Zünden des ersten Zündmittels (3a) der Insassen-Schutzvorrichtung zeitgesteuert gezündet werden soll, und
wobei dann, wenn eine Fehlerdiagnose des ersten Zündmittels (3a) ausgeführt wird und festgestellt wird, das das erste Zündmittel (3a) in einem Fehlerzustand ist, die Steuereinheit (1), um die Zündmittel zu zünden, zu dem Zeitpunkt, zu dem das erste Zündmittel (3a) normalerweise zeitgesteuert gezündet werden soll, statt des ersten Zündmittels (3a) das zweite Zündmittel (3b) zündet, und zu dem Zeitpunkt, zu dem das zweite Zündmittel (3b) normalerweise zeitgesteuert gezündet werden soll, das erste Zündmittel (3a) zündet, obwohl das Bestimmungsergebnis den Fehlerzustand des ersten Zündmittels (3a) angibt.

## Revendications

1. Procédé de commande d'entraînement d'un appareil de commande de protection des occupants pour contrôler le fonctionnement d'un appareil de protection des occupants à déclenchement en deux niveaux ayant deux moyens de déclenchement (3a, 3b),
procédé comprenant :
un procédé d'explosion retardé selon lequel le second moyen de déclenchement (3b) de l'appareil de protection des occupants est normalement programmé pour être déclenché à un instant prédéterminé après le premier moyen de déclenchement (3a) de l'appareil de protection des occupants, et
lorsque le premier moyen de déclenchement (3a) est déterminé (S204) comme étant dans un état de défaut à l'instant lorsque le premier moyen de déclenchement (3a) est normalement programmé pour être déclenché, le second moyen de déclenchement (3b) est déclenché (S400) à la place du premier moyen de déclenchement (3a) à l'instant lorsque le premier moyen de déclenchement (3a) est normalement programmé pour être déclenché et le premier moyen de déclenchement (3a) est déclenché (S600) à l'instant lorsque le second moyen de déclenchement (3b) est normalement programmé pour être déclenché malgré la détermination du résultat indiquant que le premier moyen de déclenchement (3a) est à l'état de défaut.

2. Appareil de protection des occupants pour contrôler l'entraînement d'un appareil de protection des occupants du type à déclenchement à deux niveaux ayant deux moyens de déclenchement (3a, 3b) comprenant :
une unité de commande (1) permettant de commander le déclenchement des deux moyens de déclenchement (3a, 3b) en fonction de la détermination du résultat de ce que ou non une collision de véhicule se soit produite et un circuit d'interface (2) permettant de déclencher les deux moyens de déclenchement (3a, 3b) selon le besoin de déclenchement des deux moyens de déclenchement (3a, 3b) effectués par l'unité de commande (1),
dans lequel est prévu un déclenchement retardé pour lequel le second moyen de déclenchement (3b) de l'appareil de protection des occupants est programmé pour être activé à un instant prédéterminé après le premier moyen de déclenchement (3a) de l'appareil de protection des occupants, et
si un diagnostic de défaut du premier moyen de déclenchement (3a) est effectué et si l'on a déterminé que le premier moyen de déclenchement (3a) est en état de défaut, l'unité de commande (1), pour déclencher le moyen de déclenchement, active le second moyen de déclenchement (3b) à la place du premier moyen de déclenchement (3a) à l'instant auquel le premier moyen de déclenchement (3a) est normalement programmé pour être déclenché et il déclenche le premier moyen de déclenchement (3a) à l'instant auquel le second moyen de déclenchement (3b) est normalement programmé pour être déclenché, malgré le résultat indiquant un état de défaut du premier moyen de déclenchement (3a).
